# EUROPEAN PATENT SPECIFICATION

(11) **EP 0 591 475 B1**
(45) Date of publication and mention of the grant of the patent: **20.12.1995**
(21) Application number: 92924474.7
(22) Date of filing: 01.06.1992
(51) Int. Cl.: D21B 1/32

(54) **A METHOD OF AND AN APPARATUS FOR TREATING WASTE PAPER**
VERFAHREN UND VORRICHTUNG ZUM BEHANDELN VON ABFALLPAPIER
PROCEDE ET APPAREIL DE TRAITEMENT DES VIEUX PAPIERS

(30) Priority: 07.06.1991 FI 912745
(43) Date of publication of application: 13.04.1994
(73) Proprietor: A. AHLSTROM CORPORATION, 29600 Noormarkku (FI); Kamyr, Inc., Glens Falls, New York 12801-3686 (US)
(72) Inventor: KEMPPINEN, Teuvo, SF-48600 Karhula (FI); OLKKONEN, Jorma, SF-48600 Karhula (FI)
(74) Representative: Füchsle, Klaus, Dipl.-Ing.
(86) International application number: FI9200172
(87) International publication number: WO9221812

(56) References cited:
- DE-C- 2 941 898
- DE-C- 3 225 538

## Description

The present invention relates to a method of and an apparatus for treating waste paper, the method and apparatus being specially suitable for comminuting those kinds of paper and board which are difficult to comminute, e.g. different packing and wrapping papers, corrugated boards, polyethylene-covered wrappings, other plastic-covered boards, Tetrapak™-packings and other layered papers with a great amount of contaminants.

The so-called Fibreflow™-drum is previously known from, e.g., US Patents 4,518,500 and 4,687,146, and is a drum which is capable of defibrizing easily comminutable waste paper, such as newsprint or the like. Both the construction and operating principle of the Fibreflow™-drum are relatively simple. The drum comprises two zones, separated by a partition wall, the first zone, the so-called comminuting zone, receives the material to be treated and is provided with a non-perforated mantle having ribs extending radially towards the axis of the drum. The ribs are to lift the material to be defibrized upwards and then to allow the material to fall down against the bottom of the drum, the impact comminuting the waste paper into fiber flocks. The flocculated fiber pulp is then led through an opening in the partition wall to the second, perforated, portion of the drum, where the accepted pulp particles are screened through the openings and the reject, such as pieces of plastic, thread, wire etc. are directed to a discharge via an outlet at the end of the drum. A characteristic feature of a drum such as this is that the more difficult the material is to defibrize, the longer it will be allowed to be tumbled in the drum. Another characteristic feature of a drum such as this is that difficult materials cannot be treated, as the operation of the drum is very gentle, which as itself saves the fibres.

Further, DE patent publication 32 25 538 discloses an apparatus for treating waste paper or the like, in which apparatus a drum-like screening device is in communication with a high consistency pulper comprising a cylindrical vessel and a high speed rotor arranged at the bottom thereof, the rotor subjecting the pulp to strong shearing forces and naturally, to some extent, also physically cutting the pieces on its way, thus also physically cutting the fibres. According to said DE publication, pulp initially comminuted in a batch-type pulper is discharged at a consistency of a little over 10% to an intermediate or buffer vessel arranged on a horizontal axis, the wall of the vessel being provided with a screw feeding the pulp towards a coaxial screen drum. The consistency of the pulp in the intermediate vessel is, as mentioned, about 10%, from which value the consistency is diluted to about 4-5% while the pulp is being conducted towards the screen drum. The screen drum comprises two zones, a first, very short, non-perforated portion, into which the liquid needed for diluting the pulp is directed via a concentric duct, and a second, long, conventional screening portion provided with relatively large (15 mm) perforations, in which portion the fibrous material is separated from the material to be rejected.

EP specification 194 332 discloses another prior art solution in which waste paper is treated in two subsequent drums arranged to rotate on separate shafts. In a way, in this solution the above-mentioned Fibreflow™-drum is divided in two. In the EP specification, nevertheless, the pulp pre-treated in the first drum is discharged via a connecting tube to the inlet end of the second, mainly perforated, drum. Nozzles for introducing dilution liquid are arranged at the connecting tube. The inlet end of the perforated drum comprises a so-called mixing zone, where the pre-comminuted pulp is diluted and mixed with water for the consistency to suit the screening. The mixing zone of the drum is provided with internal ribs like the Fibreflow™-drum.

Both the Fibreflow™-drums and the defibrizer according to the EP specification have the disadvantage that they are hardly or not at all suitable for treating difficultly comminutable materials. In order to achieve satisfactory results with the above defibrizers, the temperature of the treated suspension has to be as high as 90°C and chemicals have to be fed into the suspension so as to make the suspension heavily alkaline. Nevertheless, because of both the temperature and the alkalinity of the suspension the reject is also comminuted, dissolved or melted into the suspension, thus leaving the result far from optimal. In addition to this, treatment times are long and energy consumption accordingly high. Further, if a defibrizing drum only is used for treating difficultly comminutable waste paper, there will be problems with de-inking, as the drum does not physically stress the secondary material so as to cause the ink etc. particles to be easily separable from the suspension in the screening/washing stage.

The combination of a high consistency pulper and a screen drum as described in the above DE publication is not optimal, because the material is comminuted solely in the so-called HC-pulper, which is, of course, capable of performing that task, but which in the process of comminuting the material also cuts the fibres and consumes large quantities of energy. As is known, the motors used in HC-pulpers are of the order of 1000 kW, and in this case all the energy consumption of the waste paper treatment process can be considered to be due to the HC-pulper. A typical treatment time in a batch pulper is about 15-30 minutes, and thus the energy consumption is about 250-350 kWh/batch.

The object of the method and apparatus according to the invention is to optimize the treatment of waste paper, the optimal treatment including
- reduced energy consumption
- reduced amount of impurities and cut fibres
- improved screening results
- efficient deinking
- efficient removal of stickies.

A characteristic feature of the method according to the invention is that the treatment time in the HC-pulper has been considerably reduced, the time now being about 8-15 minutes. Accordingly, the screen drum has been provided with a further defibrizing zone, not only for diluting and evenly mixing the suspension, but also for further defibrizing the suspension, the defibrizing being assisted by the initial comminution in the HC-pulper. The bonds, whether glue- or other bonds, between the particles of the pulp discharged from the HC-pulper have been loosened to the extent that even the relatively gentle operation of the screen drum will attain practically the same result as an HC-repulping lasting twice as long, but without violently cutting the fibres the way an HC-pulper would do.

The characteristic features of the apparatus and method according to the invention will become clear from the accompanying claims.

In the following, the invention will be described by way of example in closer detail with reference to the accompanying drawings, in which
Fig. 1 is a schematic cross-section of an apparatus according to the invention, and
Fig. 2 is a fragmentary elevation of an advantageous construction of a defibrizing drum of an apparatus according to the invention.

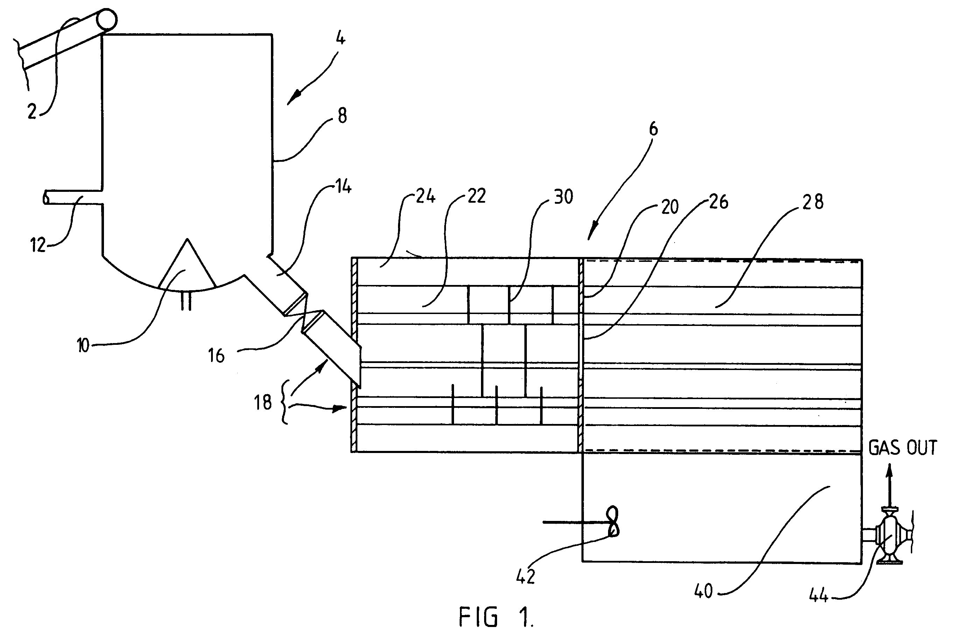

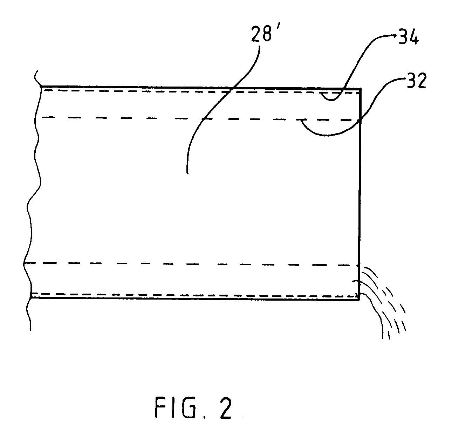

As illustrated in Figure 1, the apparatus according to the invention generally comprises a conveyor 2 or the like, by means of which the material to be treated is introduced into a high consistency pulper 4, wherefrom the partly comminuted material is discharged into the defibrizing drum 6. The high consistency pulper or, in short, the HC-pulper, comprises an actual pulper vessel 8, a rotor 10 arranged at the bottom thereof, advantageously in the central part of the bottom, a liquid inlet 12, and an outlet 14 for the initially comminuted material, advantageously arranged at an angle of about 35-60°, preferably at an angle of about 45°. The outlet 14 is provided with a valve 16 for closing the outlet during the initial comminution in the pulper 4. A dilution liquid inlet 18 for controlling the consistency of the material to be treated further is arranged to communicate with either the outlet 14 or the first end of the defibrizing drum 6. The inlet 18 can be replaced by a plurality of inlet nozzles connected to an annular dilution liquid inlet duct, the nozzles being arranged around the outlet and possibly slanted to the direction of the flow of pulp. The defibrizing drum 6 comprises parts described in the above-mentioned US patents, in other words the drum 6 is divided into two parts by a partition wall 20, the receiving, first end 22 of which is non-perforated and provided with substantially axial interior ribs 24 for lifting the pulp as the drum rotates, after which the pulp is allowed to fall down against the bottom of the drum, thus comminuting the low-consistency pulp further. This so-called further comminution zone is provided with either adjustable or fixed baffles 30 for retaining the pulp in the zone long enough to achieve the desired degree of defibrizing. As the material is treated in the defibrizing drum its consistency becomes that of being homogenized, after which it can be discharged by a feed scoop or the like through an opening 26 in the partition wall 20 into the screening portion 28 of the defibrizing drum. The screening portion 28 is perforated, thus enabling all the pulp particles smaller than the openings to be accepted through the openings while the larger particles remain inside the drum, wherefrom they are discharged via the second end of the drum to the rejects and for further treatment. The screening portion can be provided with, as illustrated in Fig. 2, a two-stage screening portion 28' consisting of two perforated drums 32 and 34, one within the other, the inner drum 32 of which is provided with larger openings (7-10 mm) for separating the largest contaminant particles, whereas the outer drum 34 is provided with the actual screening openings (4-6 mm) for withdrawing the accept.

From the either single- or two-stage screening portion 28 the accepted pulp is discharged through the perforated drum to a vessel 40 preferably having a mixer 42 for keeping the pulp moving and preventing the pulp from settling down on the bottom of the vessel. Dilution liquid can additionally be mixed into the pulp with the mixer, if needed. The pulp is discharged from the vessel by a pump 44, preferably a degassing centrifugal pump. Connecting such a pump to the process according to the invention will further optimize the above-described process and contribute to the total economy thereof. At least some gas will in any case be mixed with the pulp during the repulping, while it is known that gas is disadvantageous to subsequent pulp treatment stages.

An apparatus according to the invention operates so that the secondary material to be defibrized is firstly conveyed to the pulper vessel 8 by conveyor 2, the pulper vessel being separated from the defibrizing drum 6 by a valve 16. The consistency of the material is adjusted to the desired level, e.g. 12-18%, by feeding dilution liquid into the pulper via duct 12. The material is comminuted in the pulper by rotor 10. The rotor is rotated for, e.g., 8-15 minutes at 140-160 rpm, depending on the material to be defibrized. Subsequent to that, the material initially comminuted by the HC-pulper is periodically discharged unscreened to the defibrizing drum 6 by opening the valve 16, thus enabling the material to flow under gravity to the further comminuting/homogenizing portion 22. It is also possible, if the operation and the construction of the HC-pulper are optimized to the limit, to continuously discharge the HC-pulper by keeping the valve fully open or partly throttled. Liquid is introduced either into outlet 14 or to the further comminuting zone of the defibrizing drum for diluting the consistency of the initially comminuted material to about 8-12% prior to further treatment, a consistency suitable for the screening portion. The material is treated in the further comminuting zone of the drum as long as necessary to achieve the desired defibrizing efficiency. The pulp is thereafter allowed to be discharged into the screening portion, where the pulp is further diluted. In the screening portion the accepts fraction is separated from the pulp through the drum openings at a consistency of about 3-4%, while the rest of the material is discharged through the second end of the drum. The accepts fraction is withdrawn for further processing by a degassing centrifugal pump, thus eliminating the disadvantages caused by gas in further processing.

It can exemplarily be stated that the length of the drum treatment zone is desirably about the same as the diameter of the drum or maybe even slightly more than that. The exact dimensions of the drum do naturally depend on how difficult the material is to treat. The diameter of the drum will usually be between 2-4 m, depending on the exact application, whereas a typical retention time, when utilizing the method according to the invention, is about 20-30 minutes, and the power consumption is 15-25kW/ton of pulp. If the same amount of pulp were to be defibrized utilizing a conventional Fibreflow™-drum only, the retention time would be about 40-60 minutes, the treatment result, as far as yield is concerned, would be lower, and the consumption of hot water and chemicals would be remarkably higher. In addition to this, the process conditions in general would in most cases be negative to the total process.

As can be seen from the above, the method of defibrizing according to the invention clearly differs from the prior art solutions. Previously the material was completely comminuted in either a HC-pulper or a defibrizing drum. On the one hand, the violent treatment subjected to the fibres by the HC-pulper results in a great amount of chopped fibres and contaminants, thus causing the pulp to include a great amount of very short fibres and small contaminants, e.g. plastic, but only a small amount of long fibres. Further, the HC-pulper had to be larger than that of the present invention, because it had, in a way, to perform the tasks of two different apparatuses. On the other hand, the defibrizing drums previously used for defibrizing difficult materials were large, gave a poor yield and the retention times were long. Thus our invention has solved the disadvantages of the prior art and thereby enables the defibrizing to be optimized, with the result that the length of the fibres is not reduced during the treatment, energy consumption and the size of the necessary machinery have been reduced and treatment times have been shortened. Further, removal of stickies and ink from the pulp is now considerably more efficient, as well as the removal of fibres from plastic and foils. In addition to that, the controllability and economy of the process of comminuting difficult materials have been substantially increased, because there no more is a need for a high temperature or for the process to be strongly alkaline, but the pH of the process can as well be neutral.

Finally, please note that the above is a description of only one embodiment of the method and apparatus according to the invention, with no intention whatsoever of limiting the scope of protection from that described in the accompanying claims.

## Claims

1. A method of treating waste paper and board, especially material that is difficult to defibrize, such as different packings and wrappings, corrugated boards, polyethylene-covered wrappings, other plastic-covered boards, Tetrapak-packings and other difficultly treatable layered papers, by means of initially comminuting the material to be treated so that the fibrous material is separated from the plastic, foils, and other reject material, the method being further
**characterized** in the steps of
- comminuting said material further so that fibrous material is defibrized to the extent that it can be screened, and
- screening said material.

2. The method as recited in claim 1, **characterized** by the following treatment steps of
- introducing the material to be defibrized into an HC-pulper,
- introducing dilution liquid into the pulper,
- performing the initial comminution in the HC-pulper,
- discharging the unscreened initially comminuted material into the defibrizing drum for further comminution,
- diluting the consistency of the material so as to be suitable for the further comminution,
- comminuting the material further in the further comminuting zone of the defibrizing drum,
- homogenizing the consistency of the material in the further comminuting zone;
- discharging the material into the screening zone,
- separating the accepted fibrous material into the accepts, and
- discharging the reject from the defibrizing drum.

3. The method as recited in claim 2, **characterized** in the step of separating gas from accept by a degassing pump.

4. The method as recited in claim 2, **characterized** in the step of diluting the the material in the HC-pulper to a consistency of between 12 and 18%.

5. The method as recited in claim 2, **characterized** in the step of diluting the material in the defibrizing drum to a consistency of between 8 and 12%.

6. The method as recited in claim 2, **characterized** in that the duration of the initial comminution is about 8-15 minutes.

7. The method as recited in claim 2, **characterized** in the step of performing screening in two stages.

8. The method as recited in claim 2, **characterized** in the step of discharging the initially comminuted material into the defibrizing drum in a continuous flow.

9. An apparatus for treating waste paper and board, especially material that is difficult to defibrize, such as Tetrapak or like polyethylene-covered wrapping papers, the apparatus including an initial comminutor (4), or a so-called HC-pulper,
material inlet means (2) to the HC-pulper, and
material discharge means (14) from the HC-pulper,
and being further **characterized** in that it comprises
- a defibrizing drum (6) with a further comminuting portion (22) and a separate screening portion (28, 28') arranged therein, and
- accept and reject discharge means (40, 44).

10. The apparatus as recited in claim 9, **characterized** in that said material discharge means (14) is a tube arranged at an angle of 35-60° with a valve (16) arranged therein.

11. The apparatus as recited in claim 9, **characterized** in that the further comminuting portion (22) of the defibrizing drum (6) is non-perforated and provided with substantially axial ribs (24) and baffles (30) for improving the homogenization of the pulp, the ribs and baffles both being inside the drum (6).

12. The apparatus as recited in claim 9, **characterized** in that the length of the further comminuting portion (22) of the defibrizing drum (6) is at least equal to the diameter of the drum (6).

13. The apparatus as recited in claim 9, **characterized** in that the screening portion (28') of the drum comprises two perforated drums (32, 34), one located within the other.

14. The apparatus as recited in claim 9, **characterized** in that there is a partition wall (20) inside the drum (6), located between the further comminuting portion (22) and the screening portion (28, 28'), the partition wall being provided with an opening (26) and a lifting scoop or the like for discharging the material from the further comminuting portion (22) to the screening portion (28, 28').

15. The apparatus as recited in claim 9, **characterized** in that the accept discharge means is a vessel (40) located below the screening portion (28, 28') with a degassing centrifugal pump (44) connected thereto.

## Patentansprüche

1. Verfahren zur Behandlung von Altpapier und -pappe, insbesondere von Material das schwer zu zerkleinern ist, wie verschiedenen Verpackungen und Umschlägen, Wellpappen, polyäthylenbeschichteten Fabriksumschlägen, anderen kunststoffbeschichteten Pappen, Tetrapak-Verpackungen und anderen schwer zu behandelnden mehrlagigen Papieren, durch Vorzerkleinerung des zu behandelnden Materials auf solche Weise, daß das Fasermaterial von den Kunststoffen, Metallfolienpapieren und anderem Spuckstoff abgeschieden wird, welches Verfahren ferner durch die folgenden Schritte gekennzeichnet ist:
- Weiterzerkleinerung des Materials auf solche Weise, daß das faserhaltige Material in solchem Maße zerfasert wird, daß es sortiert werden kann, und
- Sortieren des Materials.

2. Verfahren gemäß Anspruch 1, gekennzeichnet durch die folgenden Behandlungsschritte
- Einführung des zu zerfasernden Materials in einen HC-Pulper,
- Einführung von Verdünnungsflüssigkeit in den Pulper,
- Durchführung der Vorzerkleinerung im HC-Pulper,
- Ableitung des unsortierten vorzerkleinerten Materials für Weiterbehandlung in die Zerfaserungstrommel,
- Verdünnung der Konsistenz des Materials so, daß sie für die Weiterzerkleinerung geeignet ist,
- Weiterzerkleinerung des Materials in einer weiteren Zerkleinerungszone der Zerfaserungstrommel,
- Homogenisierung der Konsistenz des Materials in der Weiterzerkleinerungszone,
- Ableitung des Materials in die Siebzone,
- Abscheidung des akzeptierten Fasermaterials zum Gutstoff, und
- Austragung des Spuckstoffs aus der Zerfaserungstrommel.

3. Verfahren gemäß Anspruch 2, gekennzeichnet durch den Schritt der Abscheidung von Gas aus dem Gutstoff mit einer entgasenden Pumpe.

4. Verfahren gemäß Anspruch 2, gekennzeichnet durch den Schritt der Verdünnung des Materials im HC-Pulper auf eine Konsistenz von 12 bis 18 %.

5. Verfahren gemäß Anspruch 2, gekennzeichnet durch den Schritt der Verdünnung des Materials in der Zerfaserungstrommel auf eine Konsistenz zwischen 8 und 12 %.

6. Verfahren gemäß Anspruch 2, dadurch gekennzeichnet, daß die Dauer der Vorzerkleinerung ungefähr 8 bis 15 Minuten ist.

7. Verfahren gemäß Anspruch 2, gekennzeichnet durch den Schritt der Durchführung der Sortierung in zwei Stufen.

8. Verfahren gemäß Anspruch 2, gekennzeichnet durch den Schritt der Abführung des vorzerkleinerten Materials als kontinuierlicher Strom in die Zerfaserungstrommel.

9. Vorrichtung zur Behandlung von Altpapier und -pappe, insbesondere schwer zu zerfaserndem Material, wie Tetrapak oder ähnlichen polyäthylenbeschichteten Umschlagspapieren, welche Vorrichtung einen Vorzerkleinerer (4) oder einen sog. HC-Pulper, Material-Eingabemittel (2) in den HC-Pulper, und Material-Austragsmittel (14) aus dem HC-Pulper umfaßt, und ferner dadurch gekennzeichnet ist, daß sie
- eine Zerfaserungstrommel (6) mit einem Weiterzerkleinerungsabschnitt (22) und einem darin angeordneten getrennten Siebabschnitt (28, 28'), und
- Austragsmittel (40, 44) für Gut- und Spuckstoff umfaßt.

10. Vorrichtung gemäß Anspruch 9, dadurch gekennzeichnet, daß es sich bei den Material-Austragsmitteln (14) um ein mit einem Winkel von 35 bis 60° angeordneten Rohr mit einem daran angeordneten Ventil (16) handelt.

11. Vorrichtung gemäß Anspruch 9, dadurch gekennzeichnet, daß der Weiterzerkleinerungsabschnitt (22) der Zerfaserungstrommel (6) nichtperforiert und zur Verbesserung der Homogenisierung der Pulpe mit hauptsächlich axialen Rippen (24) und Prallblechen (30) versehen ist, welche Rippen und Prallbleche sich beide auf der Innenseite der Trommel (6) befinden.

12. Vorrichtung gemäß Anspruch 9, dadurch gekennzeichnet, daß die Länge der Weiterzerkleinerungszone (22) der Zerfaserungstrommel (6) zumindest dem Durchmesser der Trommel (6) entspricht.

13. Vorrichtung gemäß Anspruch 9, dadurch gekennzeichnet, daß der Siebabschnitt (28') der Trommel zwei ineinander angeordnete perforierte Trommeln (32, 34) aufweist.

14. Vorrichtung gemäß Anspruch 9, dadurch gekennzeichnet, daß es innerhalb der Trommel (6) eine Trennwand (20) gibt, die zwischen Weiterzerkleinerungszone (22) und Siebabschnitt (28, 28') angeordnet ist, welche Trennwand mit einer Öffnung (26 und einer Förderschaufel oder dergleichen versehen ist zur Austragung des Materials aus der Weiterzerkleinerungszone (22) zum Siebabschnitt (28, 28').

15. Vorrichtung gemäß Anspruch 9, dadurch gekennzeichnet, daß es sich bei den Gutstoff-Austragsmitteln um einen unterhalb des Siebabschnitts (28, 28') angeordneten Behälter (40) mit einer damit verbundenen entgasenden Kreiselpumpe (44) handelt.

## Revendications

1. Procédé de traitement de papier de récupération et de carton, en particulier de matériau difficile à défibrer, tel que les empaquetages et emballages divers, les cartons ondulés, les empaquetages recouverts de polythène, autres cartons recourverts de matière plastique, les emballages Tetrapak et autres papiers enduits difficilement traitables, par désintégration initiale du matériau à traiter de façon que le matériau fibreux soit séparé du plastique, des feuilles de métal et d'autre matériau rejeté, le procédé étant en outre
**caractérisé** par les étapes consistant
- à désintégrer davantage ledit matériau de manière que le matériau fibreux soit défibré jusqu'à ce qu'il puisse être tamisé, et
- à tamiser ledit matériau.

2. Procédé selon la revendication 1, **caractérisé** par les étapes suivantes de traitement consistant
- à introduire le matériau à défibrer dans un triturateur HC,
- à introduire du liquide de dillution dans le triturateur,
- à exécuter la désintégration initiale dans le triturateur HC,
- à évacuer le matériau non tamisé initialement désintégré dans le tambour de défibrage pour la désintégration ultérieure,
- à diluer la consistance du matériau de façon à ce qu'elle convienne à la désintégration ultérieure,
- à désintégrer davantage le matériau dans la zone de désintégration ultérieure du tambour de défibrage,
- à homogénéiser la consistance du matériau dans la zone de désintégration ultérieure,
- à évacuer le matériau dans la zone de tamisage,
- à séparer le matériau fibreux accepté dans la partie acceptée, et
- à évacuer la partie rejetée du tambour de défibrage.

3. Procédé selon la revendication 2, **caractérisé** par l'étape consistant à séparer du gaz de la partie acceptée à l'aide d'une pompe de dégazage.

4. Procédé selon la revendication 2, **caractérisé** par l'étape consistant à diluer le matériau dans le triturateur HC jusqu'à une consistance comprise entre 12% et 18%.

5. Procédé selon la revendication 2, **caractérisé** par l'étape consistant à diluer le matériau dans le tambour de défibrage jusqu'à une consistance comprise entre 8% et 12%.

6. Procédé selon la revendication 2, **caractérisé** en ce que la durée de la désintégration initiale est de l'ordre de 8-15 minutes.

7. Procédé selon la revendication 2, **caractérisé** par l'étape consistant à exécuter le tamisage en deux étages.

8. Procédé selon la revendication 2, **caractérisé** par l'étape consistant à évacuer le matériau initialement désintégré dans le tambour de défibrage en un courant continu.

9. Dispositif pour traiter du papier de récupération et du carton, particulièrement du matériau difficile à défibrer, tel que Tetrapak ou les papiers d'emballage similaires recouverts de polythène, le dispositif comprenant :
- un désintégrateur initial (4), ou ce qu'il est convenu d'appeler un triturateur HC,
- un moyen d'admission (2) du matériau au triturateur HC,
et
un moyen d'évacuation (14) du matériau depuis le triturateur HC, et étant en outre
**caractérisé** en ce qu'il comprend
un tambour de défibrage (6) avec une portion de désintégration ultérieure (22) et une portion de tamisage séparée (28, 28') disposées à l'intérieur de celui-ci, et des moyens d'évacuation de la partie acceptée et de rejet (40, 44).

10. Dispositif selon la revendication 9, **caractérisé** en ce que ledit moyen d'évacuation (14) du matériau est un tube disposé sous un angle de 35°-60° avec une vanne (16) disposée dans celui-ci.

11. Dispositif selon la revendication 9, **caractérisé** en ce que la portion de désintégration ultérieure (22) du tambour de défibrage (6) est non perforée et elle présente des nervures sensiblement axiales (24) et des déflecteurs (30) pour améliorer l'homogénéisation de la pâte, ces nervures et déflecteurs étant ménagés à l'intérieur du tambour (6).

12. Dispositif selon la revendication 9, **caractérisé** en ce que la longueur de la portion de désintégration ultérieure (22) du tambour de défibrage (6) est au moins égale au diamètre du tambour (6).

13. Dispositif selon la revendication 9, **caractérisé** en ce que la portion de tamisage (28') du tambour comprend deux tambours perforés (32, 34), l'un situé à l'intérieur de l'autre.

14. Dispositif selon la revendication 9, **caractérisé** en ce qu'il existe une cloison (20) à l'intérieur du tambour (6), située entre la portion de désintégration ultérieure (22) et la portion de tamisage (28, 28'), la cloison comportant une ouverture (26) et une écope de relevage ou similaire afin d'évacuer le matériau de la portion de désingégration ultérieure (22) vers la portion de tamisage (28, 28').

15. Dispositif selon la revendication 9, **caractérisé** en ce que le moyen d'évacuation de la partie acceptée est une enceinte (40) située au-dessous de la portion de tamisage (28, 28') avec une pompe centrifuge de dégazage (44) reliée à celle-ci.
